## Europäisches Patentamt

## European Patent Office

## Office européen des brevets

(19)

(11) **EP 0 756 415 A2**

(12) # EUROPÄISCHE PATENTANMELDUNG

(43) Veröffentlichungstag:
   **29.01.1997 Patentblatt 1997/05**

(51) Int Cl.⁶: **H04N 3/15**

(21) Anmeldenummer: **96112002.9**

(22) Anmeldetag: **25.07.1996**

(84) Benannte Vertragsstaaten:
   **CH DE FR GB IT LI**

(30) Priorität: **25.07.1995 DE 19527079**

(71) Anmelder:
   • **Daimler-Benz Aerospace Aktiengesellschaft**
     **81663 München (DE)**
   • **DAIMLER-BENZ AKTIENGESELLSCHAFT**
     **70546 Stuttgart (DE)**
   • **TEMIC TELEFUNKEN microelectronic GmbH**
     **74072 Heilbronn (DE)**

(72) Erfinder:
   • **Sobotta, Gerald Dipl.-Phys. Dr.**
     **82054 Sauerlach (DE)**
   • **Platz, Willi Dipl.-Phys. Dr.**
     **81739 München (DE)**
   • **Riedel, Helmut Dr.**
     **82256 Fürstenfeldbruck (DE)**
   • **Hofmann, Karl Dr.**
     **89091 Ulm (DE)**

(54) **Vorrichtung und Verfahren zur Signal-, insbesondere Bildverarbeitung**

(57)   Die Erfindung betrifft eine Vorrichtung zur Signal-, insbesondere Bildverarbeitung, sowie zugehörige Verfahren. Von einer Vielzahl in einer Fläche regelmäßig angeordneter Sensor- bzw. Photodetektorelemente werden jeweils Signale abgenommen. Jedes dieser Elemente ist unter Bildung einer hexagonalen Struktur von sechs benachbarten gleichartigen Elementen umgeben und mit diesen über schaltbare Widerstände verbunden. Diese können jeweils zwei Schaltzstände annehmen, in denen der Stromfluß jeweils unterbrochen oder nicht unterbrochen ist. Jedem Widerstand ist eine Analogschaltung zugeordnet, welcher die über ihm liegende Potentialdifferenz zugeführt ist, und welche unter Berücksichtigung dieser Potentialdifferenz sowie einer vorwählbaren Schaltschwelle den Wechsel zwischen den Schaltzuständen des jeweiligen schaltbaren Widerstandes bewirkt. Diese Analogschaltung enthält ein Vergleichsglied (Potentialdifferenz-Referenzgröße) zur Bildung einer Schaltgröße, einen Schwellwertschalter zur Aufnahme der Schaltgröße und ggf. zur Abgabe eines Ausschaltimpulses, vier Signaleingänge sowie -ausgänge zur Verbindung mit den Analogschaltungen der jeweils vier nächstbenachbarten schaltbaren Widerstände sowie einen Schaltungsteil zur Bildung der Referenzgröße unter Berücksichtigung der an den Signaleingängen anliegenden Signale.

Abb.9: Struktur der bildverarbeitenden Analogschaltung

## Beschreibung

Die Erfindung betrifft eine Vorrichtung zur Signal-, insbesondere Bildverarbeitung gemäß den Oberbegriffen der Patentansprüche 1 bzw. 2 sowie ein Signal-, insbesondere Bildverarbeitungsverfahren gemäß den Oberbegriffen der Patentansprüche 6 bzw. 7.

Eine derartige Bildverarbeitungsvorrichtung und ein zugehöriges Verfahren sind aus der US-A-5,062,000 bekannt.

Zuvor bekannte und angewandte Bildverarbeitungsverfahren zur Bildentrauschung und zur Kantendetektion sind zumeist rein digitale Verfahren, welche die Bilddaten herkömmlicher CCD-Bildaufnehmer mit einem nachgeschalteten leistungsfähigen Prozessor aufbereiten. Lösungen mit Hilfe von analogen Schaltungen und Verfahren werden derzeit nur an wenigen Stellen wie z.B. am California Institute of Technology (Caltech) oder am Massachusetts Institute of Technology (MIT) in USA verfolgt. Erste industrielle Anwendungen sind lediglich in USA bei Rockwell oder bei Tanner Research bekannt.

Die dort erarbeiteten Analogschaltungen basieren auf Netzwerken aus schaltbaren Widerständen (Sicherungen, "fuses"), welche auch nichtlineare Kennlinien aufweisen können und welche zusammen mit bildaufnehmenden Photodioden oder Phototransistoren monolithisch in CMOS-Technologie integriert sind. Die Netzwerke sind so ausgelegt, daß jeder Bildpunkt (Pixel) eines solchen Bildaufnehmers mit seinen sämtlichen Nachbam über schaltbare Widerstandselemente verbunden ist. Befinden sich die Widerstände im stromführenden Zustand "Ein", so gleichen sie Signaldifferenzen benachbarter Bildpunkte aus und tragen somit zur Bildentrauschung bei. Im unterbrochenen Zustand "Aus" tritt die Signaldifferenz benachbarter Bildpunkte besonders deutlich in Erscheinung. Dies hat zur Folge, daß Kanten innerhalb eines Bildes hervorgehoben werden und sich dadurch die Grenzen von Bildsegmenten ermitteln lassen.

Eine derart aufgebaute Schaltung behandelt allerdings zufällige Helligkeitsunterschiede in gleicher Weise wie systematische Helligkeitsunterschiede. Dieser Mangel in den Schaltungseigenschaften läßt eine konsequente Entrauschung innerhalb einzelner Bildsegmente nicht zu. weil die Bildsegmente selbst nur über verrauschte Grenzen definiert sind

Vorarbeiten (Chr. Koch, J.Marroquin und A.Yuille. Proc. Natl. Acad.Sci, USA, Vol.83, pp. 4263 - 4267, June 1986 Biophysics) haben gezeigt, daß sich die Aufgabe der simultanen Entrauschung und Segmentierung mit zwei rückgekoppelten Netzwerken prinzipiell lösen läßt. Dies wurde für quadratisch organisierte Pixelgitter nachgewiesen. Allerdings ließen sich diese 10 Jahre alten Untersuchungen nicht in eine Analogschaltung umsetzen, da die verwendeten Algorithmen eine Schaltung mit zu großer Komplexität erfordert hätten. Ein Bildaufnehmer mit praxisrelevanter Pixelzahl wäre kaum zu realisieren gewesen. Daher beschränkten sich weitere Untersuchungen auf vereinfachte und entsprechend weniger leistungsfähige Architekturen, beispielsweise auf einfache Netzwerke (A.Lumsdaine, J.L.Wyatt Jr., I.M.Elfadel, Journal of VLSI Signal Processing, 3, 53 - 68 (1991)).

Hieraus wird deutlich, daß das Problem der Bildentrauschung und der Extraktion von Objektkanten mit Hilfe von analogen, bildverarbeitenden Schaltungen derzeit noch nicht in zufriedenstellender Weise gelöst ist.

## Zugrundeliegende Aufgabe

Der Erfindung liegt daher die Aufgabe zugrunde, ein Verfahren zu entwickeln, mit dem eine zuverlässige Segmentierung von Bildem sowie eine simultane Bildentrauschung innerhalb einzeiner Bildsegmente möglich ist. Entrauschung und Segmentierung sollen sich dabei rekursiv unterstützen. Weiterhin sollen Lücken in den Segmentberandungen ausgeheilt werden, wobei der Grad der Ausheilung einstellbar sein soll. Die Umsetzung des Verfahrens soll mit Hilfe einer Analogschaltung demonstriert werden. Diese Analogschaltung soll monolithisch integrierbar sein und sich auch für die Realisierung von Intelligenten Bildaufnehmem mit einer größeren Anzahl von Bildpunkten (z.B. 256 x 256) eignen.

## Detaillierte Beschreibung der Erfindung

Das neue Verfahren, mit welchem die Funktionen der Bildentrauschung und der Kantenextraktion in Echtzeit ermöglicht werden, nutzt die Architektur eines neuartigen elektrischen Netzwerkes. Bestandteil des Netzes für die Funktion der Bildaufnahme sind photoempfindliche Pixel in Form von Photodioden oder Phototransistoren. Zwischen benachbarten Pixeln werden für die Funktion der Bildverarbeitung lokale Verknüpfungen hergestellt, indem elektronische Baugruppen wie Verstärker, Schwellwertschalter, Analogmultiplizierer und Quadriererbausteine in geeigneter Weise miteinander verschaltet werden.

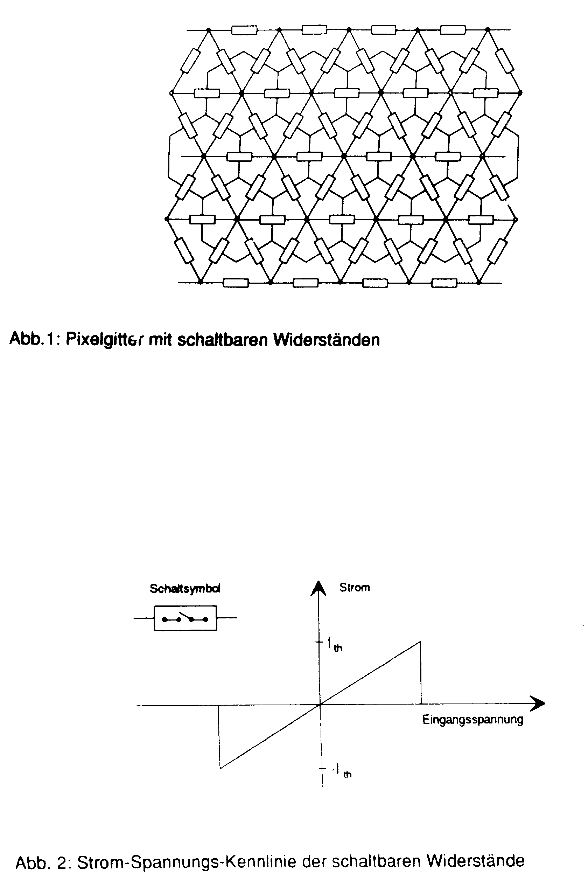

Ein solches Netzwerk weist die zur Bildverarbeitung erforderliche Leistungsfähigkeit auf und ist als monolithisch integrierte Schaltung realisierbar. Die Netzwerkstruktur stellt ein Wabengitter mit hexagonalen Pixeln dar. Jedes Pixel ist von schaltbaren Widerständen unmittelbar umgeben, die auf den sechs Grenzlinien der Waben angeordnet sind (Abb.1). Die schaltbaren Widerstände selbst bilden in dieser Anordnung ein Dreiecksgitter.

Die photoempfindlichen Elemente können an den Knotenpunkten des Netzwerkes innerhalb der Struktur integriert sein. In einer weiteren Ausführungsform können sich sämtliche photoempfindlichen Elemente auch auf einem separaten Bildaufnehmer befinden. Die Signale der einzelnen Pixel sind dann in die Knotenpunkte des Netzes einzukoppeln. wobei dies z.B. über Multiplexerschaltungen oder über dreidimensionale Anordnungen mit Kontaktierungen in jedem Pixel erfolgen kann.

Zusätzlich zur Verarbeitung von Bilddaten kann das Netzwerk auch zur Verarbeitung von beliebigen zweidimensionalen Signalfeldern eingesetzt werden. Beispielsweise können anstelle derphotoempfindlichen Elemente auch andere Sensoroelemente wie etwa Gassensoren oder Drucksensoren als Signalgeber vorliegen. Alternativ können die Signalfelder das Ergebnis von Datenverarbeitungsprozessen darstellen.

In allen Fällen werden die Signale zu den Einspeisungspunkten geführt, welche in dem hexagonalen Netz mit dem Begriff "Pixel" bezeichnet werden.

Der Betriebszustand der schaltbaren Widerstände ("Ein" oder "Aus") ist vom lokalen Spannungsabfall am jeweiligen Widerstand, d.h. von der Signaldifferenz benachbarter Pixel abhängig. Im Betriebszustand "Ein" liefert der Strom durch das Widerstandselement die Information über die Helligkeitsdifferenz der benachbarten Pixel. Überschreitet der Strom eine vorgegebene Schaltschwelle, so ist dies das Anzeichen für eine Objektkante innerhalb des zugrundegelegten Bildes. Der Betriebszustand des Widerstandselementes geht in diesem Fall in "Aus". Die Schaltschwelle der Widerstände, bei der sie von einem Zustand ohmscher Leitfähigkeit ("Ein") in den "Aus"-Zustand übergehen, läßt sich durch einen Steuerstrom bzw. eine Steuerspannung frei wählen. Gleichermaßen kann die Kennliniensteigung und damit der Widerstandswert durch geeignete Dimensionierung der Elemente sowie über Steuersignale eingestellt werden. Die Strom-Spannungs-Kennlinie dieser Widerstandselemente ist in Abb.2 dargestellt.

Eine geeignete schaltungstechnische Realisierung derartiger Elemente in CMOS-Technologie ist z.B. in [J.G. Harris, "Analog Models for Early Vision", PhD-Thesis, Califomia Institute of Technology, Pasadena, 1991] angegeben.

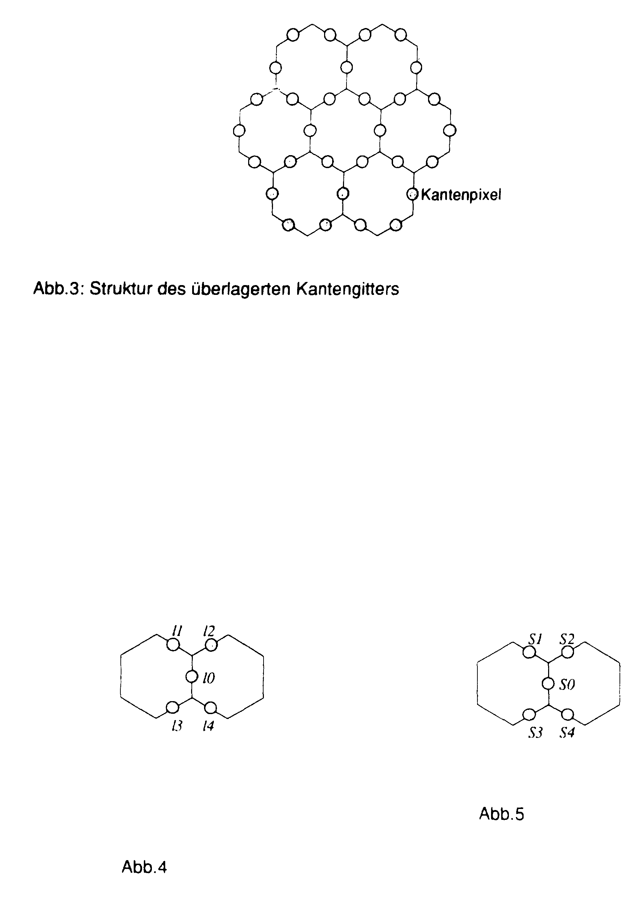

Durch die Anordnung der schaltbaren Widerstände innerhalb des hexagonalen Pixelgitters ergibt sich eine überlagerte Gitterstruktur gemäß Abb.3, die im folgenden als Kantengitter bezeichnet wird. Die Gitterpunkte dieses Kantengitters enthalten die Information über den Betriebszustand der schaltbaren Widerstände und enthalten darüber hinaus auch die elektronischen Baugruppen für die weitere Verarbeitung dieser Information.

Eine geeignete Vernetzung dieses Kantengitters wird gemäß der Erfindung für die Realisierung von bildverarbeitenden Funktionen ausgenutzt. Mit Hilfe des nachfolgend beschriebenen Verfahrens können Kanten, die im Bild durchgängig vorhanden sind, favorisiert werden. Gleichermaßen lassen sich leicht gestörte Kanten ausheilen. Im Gegensatz dazu werden kurze isolierte Kantenstücke eliminiert.

In den oben genannten Vorarbeiten wird der Schaltzustand der schaltbaren Widerstände durch eine lokale Linienvariable $I$ angegeben. Diese Variable kann die Werte $I=0$ oder $I=1$ annehmen. Um mit Hilfe dieser Variablen die gestellten Forderungen bezüglich Bildentrauschung und Segmentierung in einem Netzwerk mit lokaler Vernetzung der Elemente zu erfüllen, muß das Verfahren die in Abb.4 skizzierten Beziehungen fördern. Geht man von dem Kantengitter in Abb.3 aus, so existieren für jedes Kantenpixel vier Nachbarn, welche über die Berandungen der hexagonalen Struktur erreicht werden können. Für den Schaltzustand $I_0$ eines jeden Kantenpixels muß daher gelten:

| Nachbarschaft | | | | bevorzugte Korrelation |
|---|---|---|---|---|
| $I_1$ | $I_2$ | $I_3$ | $I_4$ | $I_0$ |
| 0 | 0 | 0 | 0 | 0 |
| 1 | 1 | 0 | 0 | 0 |
| 0 | 0 | 1 | 1 | 0 |
| 1 | 1 | 1 | 1 | 0 |
| . | . | . | . | . |
| . | . | . | . | . |
| 1 | 0 | 1 | 0 | 1 |
| 1 | 0 | 0 | 1 | 1 |
| 0 | 1 | 1 | 0 | 1 |
| 1 | 0 | 0 | 1 | 1 |

Eine spezielle Darstellung der Schaltzustände, die an den schaltbaren Widerständen auftreten, macht die Zusammenhänge übersichtlicher. Verwendet man die Variable $S_i$ als Zustandsvariable mit

$$S_i = 2 I_i - 1 \tag{1}$$

so ist ein einfacher Weg aufgezeigt, um aufgrund der nachbarschaftlichen lokalen Schaltzustände der schaltbaren Widerstände eine dynamische Adaption der Schaltschwelle zu realisieren. Die Zustandsvariable $S_0$ eines von vier Nachbarn umgebenen Kantenpixels nimmt folgende Werte an:

| Nachbarschaft | | bevorzugte Korrelation |
|---|---|---|
| $S_1 S_2 = 1$ | $S_3 S_4 = 1$ | $S_0 = -1$ |
| $S_1 S_2 = -1$ | $S_3 S_4 = -1$ | $S_0 = +1$ |

Wenn für den lokalen Spannungsabfall $\Delta f$ an einem schaltbaren Widerstand eine statische Schaltschwelle $H_S$ durch die Beziehung

$$\mu(\Delta f_0)^2 - H_S = 0 \qquad \text{mit } \mu, H_S > 0 \qquad (2)$$

eingeführt wird, ist eine Verallgemeinerung auf den dynamischen Fall durch die Beziehung

$$\mu(\Delta f_0)^2 - H_S - K S_1 S_2 - K S_3 S_4 = 0 \qquad \text{mit } \mu, H_S, K > 0 \qquad (3)$$

erreicht. Wird durch die Werte der Zustandsvariablen $S_1 S_2 S_3$ und $S_4$ ein Schaltzustand $S_0 = -1$ gefördert, so wird die Schaltschwelle des schaltbaren Widerstandes erhöht. Wird $S_0 = +1$ gefördert, so wird die Schaltschwelle abgesenkt.

Diese vergleichsweise einfache Form einer dynamischen Schaltschwelle läßt sich ebenso für einen kontinuierlichen Wertebereich einer Variablen $M_i$ $(-1 \leq M_i \leq +1)$ formulieren.

$$H_S^{dyn} = H_S + K M_1 M_2 + K M_3 M_4 \qquad (4)$$

Mit diesem Ansatz erhält man die Information, ob der für einen Schaltzustand angenommene Schätzwert $M_i$ sicher ist ($M_i \sim \pm 1$), oder ob der Schätzwert Unsicherheiten beinhaltet ($|M_i| \ll 1$).

Die Wirksamkeit einer derartigen dynamischen Schwelle ist vergleichbar mit der erheblich komplexeren dynamischen Schwelle in den Arbeiten vom Caltech (Koch et al.), das zugehörige Netzwerk ist aber erheblich einfacher.

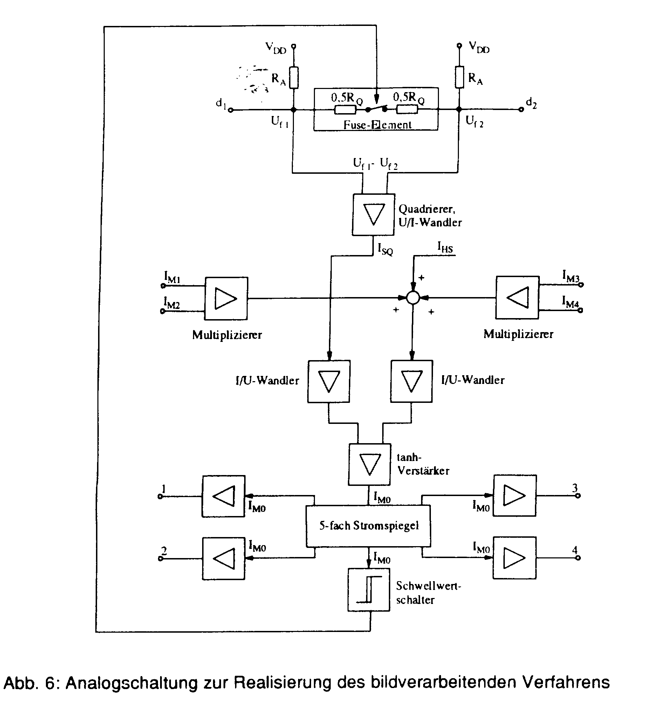

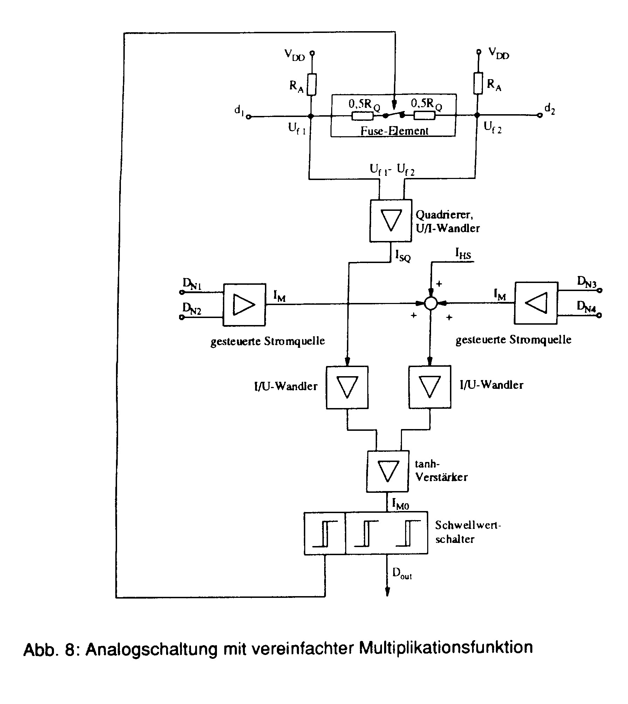

In Abb.6 ist das Blockschaltbild einer analogen elektronischen Schaltung dargestellt, mit der die Funktion einer dynamischen Schaltschwelleneinstellung realisiert wird. Das Blockschaltbild enthält die Elementarzelle einer bildverarbeitenden, hexagonal organisierten Pixelstruktur gemäß Abb.1. Die einzelnen elektronischen Funktionen innerhalb der Elementarzelle werden überwiegend mit Hilfe von analogen Schaltungskomponenten realisiert.

Im einzelnen beinhaltet die Zelle folgende Baugruppen: Einen schaltbaren Widerstand ("Fuse-Element"), einen nachfolgenden Quadrierverstärker, eine Summationsstufe, einen Differenzverstärker mit tanh-Charakteristik, Stromspiegel zur Signalauskopplung sowie einen Schwellwertschalter, dessen Ausgang auf das Fuse-Element rückgekoppelt ist. Für die Realisierung wird eine CMOS-Technologie verwendet, jedoch kann die Schaltung auch in anderen Technologien wie z.B. als Bipolar-, NMOS-, PMOS- oder BICMOS-Schaltung ausgeführt werden. Im Falle von CMOS erfolgt der Betrieb der Analogschaltung weitestgehend mit Stromsignalen.

*Fuse-Element:*

Die beiden Dateneingänge $d_1$ und $d_2$ des Fuse-Elementes sind mit zwei benachbarten Pixeln eines vorgeschalteten Bildaufnehmers verbunden. Von jedem dieser beiden Pixel wird ein Teil der Photoströme dem Fuse-Element zugeführt. Die Kopplung zwischen den beiden Eingängen, d.h. der Widerstandswert des Fuse-Elementes, wird über einen Biasstrom variiert.

*Quadrierverstärker:*

Ein nachfolgend geschalteter Quadrierverstärker bildet das Quadrat der Differenzspannung, die am Fuse-Element abfällt, und wandelt das Ausgangssignal in eine Stromgröße $I_{SQ}$. In der quadratischen Kennlinie des Ausgangssignals läßt sich die Parabelöffnung mit Hilfe eines Biasstromes bzw. einer Biasspannung variieren. Die Lage des Scheitelpunktes der Parabel kann duch die Dimensionierung der einzelnen Transistoren innerhalb des Verstärkerbausteines ebenfalls variabel gestaltet werden.

Die Funktionalität des Quadrierers läßt sich alternativ auch durch Absolutbetragbildung oder durch eine andere konvexe symmetrische Funktion realisieren.

*Multiplizierer und Addierstufe*

Mit Hilfe von zwei Vier-Quadranten-Multiplizierern wird gemäß dem Schema in Abb.5 das Produkt der Signale $S_1S_2$ und $S_3S_4$ von jeweils zwei benachbarten Kantenpixeln gebildet. Durch die Einspeisung von Biasströmen läßt sich der Verstärkungsfaktor der Multipliziererbausteine einstellen. Die beiden Signalprodukte der vier benachbarten Kantenpixel bilden zusammen mit einem Offsetstrom $I_{HS}$ ("statische Schwelle") ein Summensignal ("dynamische Schwelle", Gl.(4)), das als Stromsignal für die weitere Umsetzung des bildverarbeitenden Verfahrens benötigt wird.

*Tangens-Hyperbolicus-Verstärker:*

In einer nachfolgenden Verstärkerstufe wird die Signaldifferenz dieses Summensignals und des Signals aus dem Quadrierverstärker gebildet. Um bei größeren Differenzen des Eingangssignals eine weiche Begrenzung des Ausgangssignals in dieser Verstärkerstufe zu erhalten, muß die Verstärkerstufe eine tanh-Charakteristik aufweisen. Dies wird erreicht durch die Verwendung eines U/I-Verstärkers. Hierfür ist zuvor eine Wandlung der Eingangsströme in Spannungen erforderlich. Das Ausgangssignal wird wiederum als Stromgröße $I_{M0}$ ausgegeben.

*Stromspiegel zur Signalauskopplung:*

Anteile des Stromes $I_{M0}$ werden durch geeignete Stromspiegel den vier benachbarten Kantenpixeln $S_1$ $S_2$ $S_3$ und $S_4$ gemäß der Anordnung in Abb.5 zurückgeführt.

*Schwellwertschalter:*

Der Stromwert $I_{M0}$ wird in einem Schwellwertschalter mit einer einstellbaren Schaltschwelle verglichen. Aus diesem Vergleich wird ein digitales Signal abgeleitet, welches auf das Fuse-Element rückgekoppelt wird und dieses bei Uberschreiten der Schaltschwelle unterbricht (Zustand "Aus").

*Alternative Schaltung zur Realisierung des Verfahrens:*

In einer integrierten Schaltung, die das beschriebene Verfahren realisiert, ist der große Flächenbedarf der Analog-Multipliziererbausteine von Nachteil. Es sind daher konzeptionelle und schaltungstechnische Alternativen anzustreben, die eine Vereinfachung der Multiplikationsfunktion ermöglichen ohne dabei die Funktionalität der Gesamtschaltung zu beeinträchtigen. Insbesondere müssen die Symmetrieeigenschaften der Multiplikationsfunktion beibehalten werden.

Eine Multiplikationsfunktion liefert als Ergebnis in der Regel eine glatte Kurve. In einer Vereinfachung kann das Ergebnis auch quantisiert durch eine "Treppenkurve" repräsentiert werden. Variiert man die Anzahl der Stufen, so kann die Annäherung an eine glatte Kurve und damit die Genauigkeit des Verfahrens gesteuert werden. Im folgenden wird hierfür ein Ausführungsbeispiel wiedergegeben, das auf der Schaltungsarchitektur aus Abb. 6 aufbaut und eine dreistufige Quantisierung verwendet.

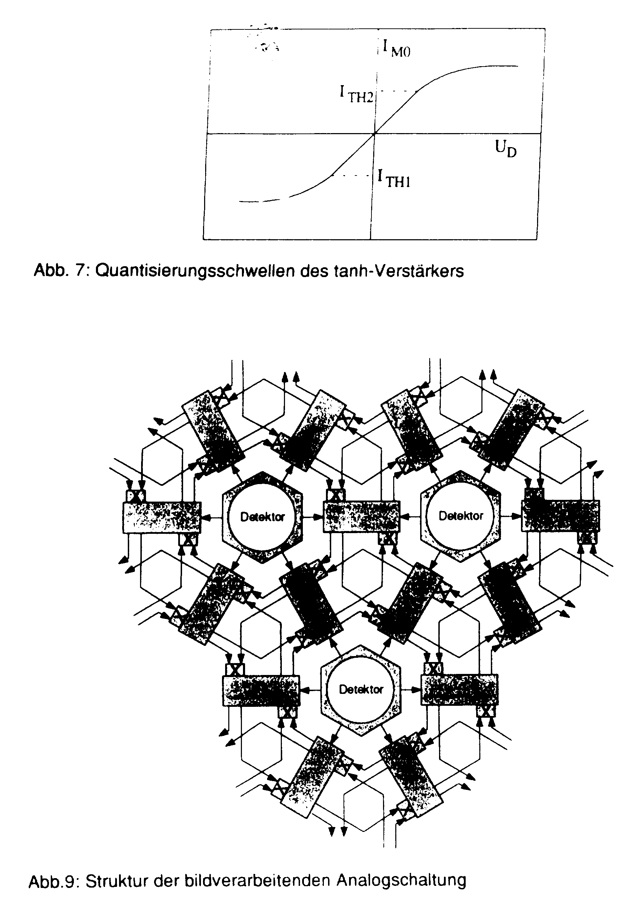

Zur Quantisierung des Ausgangsstroms $I_{M0}$ des tanh-Verstärkers (Abb. 6) werden in dessen Ausgangscharakteristik gemäß Abb. 7 zwei symmetrische Quantisierungsschwellen $I_{TH1}$ und $I_{TH2}$ definiert. Der Betrag von $I_{TH1}$ und $I_{TH2}$ ist variabel.

Mit Hilfe von einfach zu realisierenden Schwellwertdetektoren lassen sich einer Zustandsvariablen Z drei Zustände Z=-1, Z=0 und Z=+1 zuordnen. Dabei entspricht Z=-1 einem Ausgangsstrom $I_{M0}$, der kleiner als die Schwelle $I_{TH1}$ ist. Z=+1 entspricht einem Strom $I_{M0}$, der größer als die Schwelle $I_{TH3}$ ist, und Z=0 entspricht einem Ausgangsstrom, der sich im Wertebereich zwischen $I_{TH1}$ und $I_{TH2}$ bewegt.

Diese *drei* Zustände können über drei separate Datenleitungen mit logischer "0" oder "1" am Ausgang eines Schwellwertdetektors bereitgestellt werden, jedoch auch auf einer einzigen Ausgangsleitung kodiert (z.B. amplitudenkodiert) vorliegen.

Eine Vereinfachung der Multiplikationsfunktion für zwei Eingangsgrößen kann z.B. durch eine gesteuerte Stromquelle mit zwei Digitaleingängen erreicht werden. In Abb. 8 ist ein Prinzipschaltbild entsprechend Abb. 6 dargestellt. Die Informationen der vier benachbarten Kantenpixel werden über die (digitalen) Dateneingänge DN1, DN2, DN3 und DN4 bereitgestellt. Wie bereits erwähnt, können diese Dateneingänge entweder als 3-bit breite Busse vorliegen oder auch als Einzelleitungen. Mit Hilfe einer Logikschaltung werden die Dateneingänge DN1 und DN2 bzw. DN3 und DN4 innerhalb der gesteuerten Quelle dergestalt verarbeitet, daß eine Entscheidung über den Ausgangsstrom $I_M$ nach der Wahrheitstabelle Tab. 5.1 erfolgt. Der Betrag von $I_M$ kann als Parameter der gesteuerten Quelle variiert werden.

Tab. 5.1:

| Wahrheitstabelle zur Festlegung des quantisierten Ausgangsstroms $I_M$ für einen vereinfachten Multiplizierer | | | |
|---|---|---|---|
| $\frac{DN1}{DN2}$ | -1 | 0 | +1 |
| -1 | $+I_M$ | 0 | $-I_M$ |
| 0 | 0 | 0 | 0 |
| +1 | $-I_M$ | 0 | $+I_M$ |

Dies zeigt, daß eine angenäherte Multiplikationsfunktion für vier Quadranten in einfacher Weise erzielt werden kann. Die Genauigkeit des Verfahrens läßt sich durch Erhöhen der Anzahl von Quantisierungsstufen steigern. Gleichermaßen kann auch der Betrag des Quellenstroms $I_M$ zur Steigerung der Genauigkeit mit den Quantisierungsschwellen korreliert werden.

*Netzwerk aus Elementatzellen:*

Eine bildverarbeitende Analogschaltung wird mit Hilfe der beschriebenen Elementarzelle realisiert, indem ein Netzwerk solcher Zellen gemäß Abb.7 verschaltet wird. Entsprechend der Architektur mit hexagonalen Pixeln und zugehörigen schaltbaren Widerständen aus Abb.1 wird zur Realisierung der Funktionen "Bildentrauschung" und "Kantenextraktion" ebenfalls eine hexagonale Anordnung gewählt. Die einzelnen Elementarzellen bilden innerhalb der Architektur ein Dreiecksgitter. Der Bildaufnehmer kann in Form von lichtempfindlichen Detektoren wie z.B. Photodioden oder Phototransistoren ebenfalls in der Schaltung integriert sein.

Die Gesamtzahl der erforderlichen Elementarzellen und Photoelemente richtet sich nach den Erfordernissen der Bildverarbeitungsaufgabe. Pixelgröße, Pixelabstand, Aufteilung der Pixel in den beiden Achsenrichtungen und Leistungsverbrauch der Schaltung können durch die Dimensionierung der Schaltung individuell eingestellt werden.

Die Schaltung kann auch in einer Weise eingesetzt werden, daß nur bestimmte Bereiche innerhalb einer Bildebene (areas of interest) damit bearbeitet werden. Durch geeignete Wahl der Auslesetechnik des verwendeten Bildaufnehmers läßt sich die "area of interest" über der gesamten Bildebene beliebig statisch und dynamisch verschieben, so daß die bildverarbeitenden Funktionen der Schaltung auch für Tracking Anwendungen und für die Realisierung einer Aufmerksamkeitssteuerung genutzt werden können.

**Patentansprüche**

1. Vorrichtung zur Verarbeitung eines Signalfeldes von Sensorsignalen, welche von den einzelnen Sensorelementen einer Vielzahl in einer Fläche regelmäßig angeordneter Sensorelemente stammen, die jeweils von sechs benachbarten Sensorelementen unter Bildung einer hexagonalen Struktur umgeben sind, wobei die Vorrichtung zur Aufnahme der Sensorsignale Einspeisungspunkte in einer Zuordnung aufweist, die der hexagonalen Struktur der Anordnung der Sensorelemente entspricht, wobei jeder Einspeisungspunkt mit jedem der sechs benachbarten Einspeisungspunkte jeweils über einen schaltbaren Widerstand verbunden ist, der zwei Schaltzustände annehmen kann, in denen der Stromfluß durch den jeweiligen Widerstand entweder unterbrochen (Schaltzustand "Aus") oder nicht unterbrochen (Schaltzustand "Ein") ist, und wobei jedem Widerstand eine Analogschaltung zugeordnet ist, welcher die über letzterem liegende Potentialdifferenz zugeführt ist, und welche unter Berücksichtigung dieser Potentialdifferenz sowie einer vorwählbaren Schaltschwelle den Wechsel zwischen den Schaltzuständen des jeweiligen schaltbaren Widerstandes bewirkt, **gekennzeichnet durch**

   - ein Vergleichsglied, welches durch Vergleich einer die Potentialdifferenz repräsentierenden Größe mit einer Referenzgröße ausgangsseitig eine Schaltgröße ($I_{M0}$) bildet,

   - einen Schwellwertschalter, welcher eingangsseitig die Schaltgröße aufnimmt und, falls diese die vorwählbare Schaltschwelle überschreitet, ausgangsseitig einen den Schaltzustand "Aus" bewirkenden Schaltimpuls abgibt,

   - vier Signalausgänge (1, 2, 3, 4) sowie vier Signaleingänge ($I_{M1}$, $I_{M2}$, $I_{M3}$, $I_{M4}$), welche jeweils mit einem Signaleingang bzw. einem Signalausgang einer der vier den vier nächstbenachbarten schaltbaren Widerständen zugeordneten Analogschaltungen verbunden sind, wobei den vier Signalausgängen jeweils ein die Schaltgröße repräsentierendes Signal zugeführt ist,

- und einen Schaltungsteil zur Bildung der Referenzgröße unter Berücksichtigung der an den vier Signaleingängen anliegenden Signale.

2. Vorrichtung zur Bild verarbeitung, mit einer Vielzahl in einer Fläche regelmäßig angeordneter Photodetektorelemente, welche jeweils von sechs benachbarten Photodetektorelementen unter Bildung einer hexagonalen Struktur umgeben und mit diesen über schaltbare Widerstände verbunden sind, die zwei Schaltzustände annehmen können, in denen der Stromfluß durch den jeweiligen Widerstand entweder unterbrochen (Schaltzustand "Aus") oder nicht unterbrochen (Schaltzustand "Ein") ist, wobei jedem Widerstand eine Analogschaltung zugeordnet ist, welcher die über dem jeweiligen schaltbaren Widerstand liegende Potentialdifferenz zugeführt ist, und welche unter Berücksichtigung dieser Potentialdifferenz sowie einer vorwählbaren Schaltschwelle den Wechsel zwischen den Schaltzuständen des jeweiligen schaltbaren Widerstandes bewirkt, **gekennzeichnet durch**

- ein Vergleichsglied, welches durch Vergleich einer die Potentialdifferenz repräsentierenden Größe mit einer Referenzgröße ausgangsseitig eine Schaltgröße ($I_{M0}$) bildet,

- einen Schwellwertschalter, welcher eingangsseitig die Schaltgröße aufnimmt und falls diese die vorwählbare Schaltschwelle überschreitet, ausgangsseitig einen den Schaltzustand "Aus" bewirkenden Schaltimpuls abgibt,

- vier Signalausgänge (1, 2, 3, 4) sowie vier Signaleingänge ($I_{M1}$, $I_{M2}$, $I_{M3}$, $I_{M4}$), welche jeweils mit einem Signaleingang bzw. einem Signalausgang einer der vier den vier nächstbenachbarten schaltbaren Widerständen zugeordneten Analogschaltungen verbunden sind, wobei den vier Signalausgängen jeweils ein die Schaltgröße repräsentierendes Signal zugeführt ist,

- und einen Schaltungsteil zur Bildung der Referenzgröße unter Berücksichtigung der an den vier Signaleingängen anliegenden Signale.

3. Vorrichtung nach Anspruch 1 oder 2, **dadurch gekennzeichnet,** daß die Signaleingänge paarweise mit jeweils einem Multiplizierer verbunden sind, deren Ausgänge zwei Eingängen einer ausgangsseitig die Referenzgröße abgebenden Summationsstelle zugeführt sind.

4. Vorrichtung nach Anspruch 3, **dadurch gekennzeichnet,** daß einem weiteren Eingang des Summationsgliedes ein eine statische Schaltschwelle repräsentierendes Signal zugeführt ist.

5. Vorrichtung nach einem der vorhergehenden Ansprüche, **dadurch gekennzeichnet,** daß das Vergleichsglied ein Verstärker mit tanh-Charakteristik ist.

6. Signalverarbeitungsverfahren zur Anwendung bei einer Vorrichtung zur Verarbeitung eines Signalfeldes von Sensorsignalen, welche von den einzelnen Sensorelementen einer Vielzahl in einer Fläche regelmäßig angeordneter Sensorelemente stammen, die jeweils von sechs benachbarten Sensorelementen unter Bildung einer hexagonalen Struktur umgeben sind, wobei die Vorrichtung zur Aufnahme der Sensorsignale Einspeisungspunkte in einer Zuordnung aufweist, die der hexagonalen Struktur der Anordnung der Sensorelemente entspricht, wobei jeder Einspeisungspunkt mit jedem der sechs benachbarten Einspeisungspunkte jeweils über einen schaltbaren Widerstand verbunden ist, der zwei Schaltzustände unterschiedlicher elektrischer Leitfähigkeit annehmen kann, und wobei der Wechsel zwischen den Schaltzuständen bei dem jeweiligen schaltbaren Widerstand unter Berücksichtigung der über diesem liegenden Potentialdifferenz sowie einer vorwählbaren Schaltschwelle bewirkt wird, **dadurch gekennzeichnet,** daß für jeden schaltbaren Widerstand ein Bewertungsverfahren durchgeführt wird, bei dem aus einem Vergleich einer die Potentialdifferenz repräsentierenden Größe mit einer Referenzgröße eine Schaltgröße abgeleitet und aus einem Vergleich dieser Schaltgröße mit einer vorwählbaren Schaltschwelle ein Kriterium für den Wechsel zwischen den beiden Schaltzuständen des jeweiligen schaltbaren Widerstandes gewonnen wird, wobei zur Bildung der Referenzgröße Informationen über diejenigen vier Schaltgrößen herangezogen werden, welche gleichzeitig in den für die jeweils vier nächstbenachbarten schaltbaren Widerstände durchgeführten Bewertungsverfahren gebildet werden.

7. Bildverarbeitungsverfahren zur Anwendung bei einer Vorrichtung, die eine Vielzahl in einer Fläche regelmäßig angeordneter Photodetektorelemente aufweist, welche jeweils von sechs benachbarten Photodetektorelementen unter Bildung einer hexagonalen Struktur umgeben und mit diesen über schaltbare Widerstände verbunden sind, die zwei Schaltzustände unterschiedlicher elektrischer Leitfähigkeit annehmen können, wobei der Wechsel zwischen den Schaltzuständen bei dem jeweiligen schaltbaren Widerstand unter Berücksichtigung der über diesem liegenden Potentialdifferenz so-wie einer vorwählbaren Schaltschwelle bewirkt wird, **dadurch gekennzeichnet,** daß für jeden schaltbaren Widerstand ein Bewertungsverfahren durchgeführt wird, bei dem aus einem Vergleich einer die Potentialdifferenz repräsentierenden Größe mit einer Referenzgröße eine Schaltgröße abgeleitet und aus einem Vergleich dieser Schaltgröße mit einer vorwählbaren Schaltschwelle ein Kriterium für den Wechsel zwischen den beiden Schaltzuständen des jeweiligen schaltbaren Widerstandes gewonnen wird, wobei zur Bildung der Referenzgröße Informationen über diejenigen vier Schaltgrößen herangezogen werden, welche gleichzeitig in den für die jeweils vier nächstbenachbarten schaltbaren Widerstände durchgeführten Bewertungsverfahren gebildet werden.

8. Verfahren nach Anspruch 6 oder 7, **dadurch gekennzeichnet,** daß je zwei der vier Schaltgrößen aus den den vier nächstbenachbarten schaltbaren Widerständen jeweils zugeordneten Bewertungsverfahren durch Multiplikation paarweise zusammengefaßt und die beiden resultierenden Produkte zur Bildung der Referenzgröße addiert werden.

9. Verfahren nach Anspruch 8, **dadurch gekennzeichnet,** daß bei der Bildung der Referenzgröße eine vorwählbare statische Schaltschwelle hinzuaddiert wird.

**Abb. 1: Pixelgitter mit schaltbaren Widerständen**

**Abb. 2: Strom-Spannungs-Kennlinie der schaltbaren Widerstände**

Abb.3: Struktur des überlagerten Kantengitters

I1   I2
I0
I3   I4

Abb.4

S1   S2
S0
S3   S4

Abb.5

Abb. 6: Analogschaltung zur Realisierung des bildverarbeitenden Verfahrens

**Abb. 8: Analogschaltung mit vereinfachter Multiplikationsfunktion**

Abb. 7: Quantisierungsschwellen des tanh-Verstärkers

Abb.9: Struktur der bildverarbeitenden Analogschaltung